Europäisches Patentamt

(19) European Patent Office

Office européen des brevets

(11) EP 0 908 874 A1

(12) EUROPEAN PATENT APPLICATION

(43) Date of publication:
14.04.1999 Bulletin 1999/15

(51) Int. Cl.$^6$: **G11B 7/12**, G11B 7/135, G11B 7/00, G11B 11/10

(21) Application number: 98104381.3

(22) Date of filing: 11.03.1998

(84) Designated Contracting States:
AT BE CH DE DK ES FI FR GB GR IE IT LI LU MC NL PT SE
Designated Extension States:
AL LT LV MK RO SI

(30) Priority: 06.10.1997 JP 272869/97

(71) Applicant: FUJITSU LIMITED
Kawasaki-shi, Kanagawa 211-8588 (JP)

(72) Inventors:
• Morimoto, Yasuaki,
c/o Fujitsu Limited
Kawasaki-shi, Kanagawa 211-8588 (JP)

• Nishimoto, Hideki,
c/o Fujitsu Limited
Kawasaki-shi, Kanagawa 211-8588 (JP)
• Ukai, Harataka,
c/o Fujitsu Limited
Kawasaki-shi, Kanagawa 211-8588 (JP)

(74) Representative:
Seeger, Wolfgang, Dipl.-Phys.
SEEGER & SEEGER
Patentanwälte & European Patent Attorneys
Georg-Hager-Strasse 40
81369 München (DE)

(54) **Magneto-optic recording medium and optical information storage unit**

(57) An optical information storage unit irradiates a light on a recording medium having a recording surface with a land and a groove by use of a near field and detects a reproduced signal from a reflected light which is reflected by the recording medium. The optical information storage unit is provided with a first optical system (9-12) detecting a signal reproduced from the land based on the reflected light, and a second optical system (13-16), independent of said first optical system, detecting a signal reproduced from the groove based on the reflected light.

FIG. 2

## Description

BACKGROUND OF THE INVENTION

The present invention generally relates to magneto-optic recording mediums and optical information storage units, and more particularly to a magneto-optic recording medium and an optical information storage unit which are suited for carrying out a high-density information recording and reproduction.

In this specification, an "information storage unit" refers to an apparatus which records information on and/or reproduces information from a recording medium.

Recently, there is much attention on a recording and reproducing technique which uses the near field when magneto-optically recording and reproducing information on and from a recording medium. Active research is made particularly in a technique which uses a solid immersion lens (hereinafter referred to as a solid immersion lens (SIL) technique), because the SIL technique can realize a super high density information recording and reproduction. The SIL technique itself is disclosed for example in "Current Status & Future of Magneto-Optical Disks" by Nobutake Imamura, MO DISK, Japan, 21st, August 1996, pp.54-55.

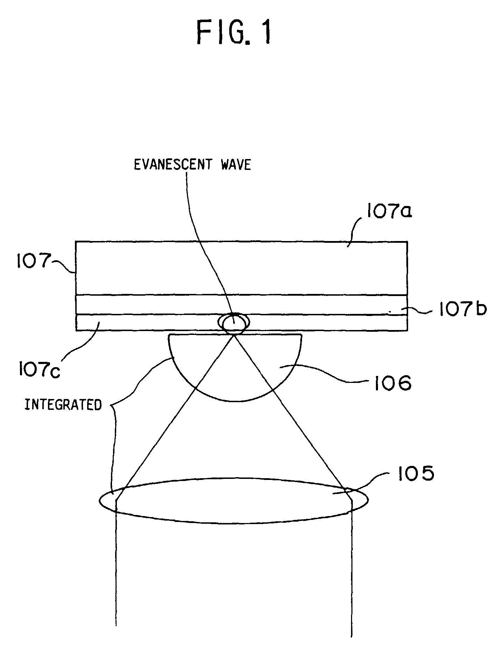

FIG.1 is a cross sectional view for explaining the operating principle of the SIL technique. In FIG. 1, a bundle of rays emitted from a light source (not shown) is once converted into parallel rays by a collimator lens (not shown) or, is converted into a convergent spherical wave by a non-aberration lens 105 which can converge the bundle of rays to a diffraction limit in a state of a direct divergent light. The convergent spherical wave is incident to a spherical surface side of a hemispherical lens 106 which is made of a material having a large refractive index, and converges on a surface cut along a equatorial plane of the hemispherical lens 106.

A magneto-optic recording medium 107 is made up of a substrate 107a, a magneto-optic recording layer 107b, and a protection layer 107c. A gap between the hemispherical lens 106 and the magneto-optic recording layer 107b is maintained less than or equal to a wavelength of the bundle of rays irradiated due to an air flow. Because the refractive index of the hemispherical lens 106 is extremely large, a large portion of the bundle of rays undergoes a total reflection if no object exists in a vicinity of the convergent surface. However, if an object exists in the vicinity of the convergent surface, the bundle of rays is radiated due to an evanescent wave coupling.

A spot size of a light beam at an emission surface of the hemispherical lens 106 is inversely proportional to a product of the refractive index and a numerical aperture (NA) of the non-aberration lens 105. In other words, the larger both the refractive index and the NA are, the smaller the spot size of the light beam. For example, if the refractive index is 2, the spot size of the light beam becomes one-half by the provision of the hemispherical lens 106 as compared to a case where only the non-aberration lens 106 having the same NA is provided.

As described above, the SIL technique is an extremely important technique for realizing the super high density information recording and reproduction. For this reason, in order to further improve the recording density, it is desirable to apply the SIL technique to a magneto-optic recording medium having a land and a groove to be recorded with information.

When recording the information on the land, the groove exists between two adjacent lands, and the generation of a crosstalk in which the information recorded on the adjacent land mixes into the reproduced information is suppressed because the lands recorded with the information are separated from each other. Similarly, when recording the information on the groove, the land exists between two adjacent grooves, and the generation of a crosstalk in which the information recorded on the adjacent groove mixes into the reproduced information is suppressed because the grooves recorded with the information are separated from each other.

However, when recording the information on both the land and the groove, information recording regions become contiguous and the generation of the crosstalk from the contiguous recording regions is unavoidable, thereby greatly affecting the information reproducing characteristic.

A method of reducing the crosstalk from the land or the groove by appropriately setting a depth of the groove has been proposed in a Japanese Laid-Open Patent Application No.8-7357, for example. According to this proposed method, in a case where the wavelength of the light beam is 680 nm, the NA of an objective lens used is 0.55 and the widths of the land and the groove are 0.7 $\mu$m, the crosstalk is reduced by setting the depth of the groove to approximately 1/6 the wavelength.

But even if the spot size of the light beam irradiated on the recording surface of the magneto-optic recording medium is the same, as the track pitch becomes narrower by the use of the SIL technique described above, there was a problem in that the crosstalk cannot be reduced sufficiently in the case of a groove having the depth on the order of approximately 1/6 the wavelength. In addition, compared to the normal case where the depth of the groove of the magneto-optic recording medium is 1/8 the wavelength, there also were problems in that a carrier level of the signal decreases and a level of a push-pull signal which is used as a tracking error signal also decreases in the case of the groove having the depth on the order of approximately 1/6 the wavelength.

On the other hand, it has been reported that the condition for reducing the crosstalk in the proposed method, that is, the setting of the depth of the groove of the magneto-optic recording medium, easily changes depending on the Kerr ellipticity, spherical aberration and focal error of the objective lens, and the like.

Further, even in a case where the information is recorded on the land or the groove of the magneto-optic recording medium, a reflected light component from the adjacent groove or land increases thereby introducing a phase error as the track pitch is further reduced by employing the SIL technique. As a result, there was a problem in that the information cannot be reproduced satisfactorily from the magneto-optic recording medium because the polarization state changes due to the phase error.

SUMMARY OF THE INVENTION

Accordingly, it is a general object of the present invention to provide a novel and useful magneto-optic recording medium and optical information storage unit, in which the problems described above are eliminated.

Another and more specific object of the present invention is to provide a magneto-optic recording medium and an optical information storage unit which can reduce a crosstalk from adjacent tracks on a recording medium and can satisfactorily reproduce information regardless of a change in a polarization state.

Still another object of the present invention is to provide an optical information storage unit for irradiating a light on a recording medium having a recording surface with a land and a groove by use of a near field and for detecting a reproduced signal from a reflected light which is reflected by the recording medium, comprising a first optical system detecting a signal reproduced from the land based on the reflected light, and a second optical system, independent of the first optical system, detecting a signal reproduced from the groove based on the reflected light. According to the optical information storage unit of the present invention, it is possible to obtain a high quality reproduced signal in which no crosstalk from an adjacent track is generated, when a signal reproduced from the land and the groove of the recording medium is detected by independent optical systems, even if the signals recorded on both the land and the groove are reproduced. Particularly in a case where the phase compensation is carried out with respect to the reproduced signal from the land and the reproduced signal from the groove using mutually different phase compensation quantities, it is possible to effectively prevent the generation of the crosstalk. As a result, even if the track pitch becomes extremely narrow by employing the SIL technique, it is possible to obtain a high quality reproduced signal which is unaffected by the crosstalk from the adjacent tracks. In addition, the level of the reproduced signal, including a tracking error signal, will not decrease even when the above described measures are taken with respect to the crosstalk.

A further object of the present invention is to provide an optical information storage unit recited in claim 4 for irradiating a light on a recording medium having a recording surface with a land and a groove by use of a near field and for detecting a reproduced signal from a transmitted light which is transmitted through the recording medium and a reflected light which is reflected by the recording medium, comprising a first optical system detecting a signal reproduced from one of the land and the groove based on the transmitted light, and a second optical system, independent of the first optical system, detecting a signal reproduced from the other of the land and the groove based on the reflected light. According to the optical information storage unit of the present invention, it is possible to obtain a high quality reproduced signal in which no crosstalk from an adjacent track is generated, when a signal reproduced from the land and the groove of the recording medium is detected by independent optical systems, even if the signals recorded on both the land and the groove are reproduced. Particularly in a case where the phase compensation is carried out with respect to the reproduced signal from the land and the reproduced signal from the groove using mutually different phase compensation quantities, it is possible to effectively prevent the generation of the crosstalk. As a result, even if the track pitch becomes extremely narrow by employing the SIL technique, it is possible to obtain a high quality reproduced signal which is unaffected by the crosstalk from the adjacent tracks. In addition, the level of the reproduced signal, including a tracking error signal, will not decrease even when the above described measures are taken with respect to the crosstalk.

Another object of the present invention is to provide an optical information storage unit for irradiating a light on a recording medium having a recording surface with a land and a groove by use of a near field and for detecting a reproduced signal from a transmitted light which is transmitted through the recording medium, comprising a first optical system detecting a signal reproduced from the land based on the transmitted light, and a second optical system, independent of the first optical system, detecting a signal reproduced from the groove based on the transmitted light. According to the optical information storage unit of the present invention, it is possible to obtain a high quality reproduced signal in which no crosstalk from an adjacent track is generated, when a signal reproduced from the land and the groove of the recording medium is detected by independent optical systems, even if the signals recorded on both the land and the groove are reproduced. Particularly in a case where the phase compensation is carried out with respect to the reproduced signal from the land and the reproduced signal from the groove using mutually different phase compensation quantities, it is possible to effectively prevent the generation of the crosstalk. As a result, even if the track pitch becomes extremely narrow by employing the SIL technique, it is possible to obtain a high quality reproduced signal which is unaffected by the crosstalk from the adjacent tracks. In addition, the level of the reproduced signal, including a tracking error signal, will not decrease even when the above described measures are taken with respect to the crosstalk.

Still another object of the present invention is to provide a magneto-optic recording medium comprising a transparent substrate, and a recording surface, provided on the substrate, and having a land and a groove having approximately the same widths, the groove having an optical depth d described by $\lambda(1/d+(1/2)n)$ or $\lambda((1/2)m-1/d)$, where $\lambda$ denotes a wavelength of a bundle of rays irradiated on the recording surface, n is an integer greater than or equal to 0, m is an integer greater than or equal to 1, wherein d is set to satisfy a condition $10 > d > 7$. According to the magneto-optic recording medium of the present invention, it is possible to obtain a high quality reproduced signal in which no crosstalk from an adjacent track is generated, when a signal reproduced from the land and the groove of the recording medium is detected by independent optical systems, even if the signals recorded on both the land and the groove are reproduced. Particularly in a case where the phase compensation is carried out with respect to the reproduced signal from the land and the reproduced signal from the groove using mutually different phase compensation quantities, it is possible to effectively prevent the generation of the crosstalk. As a result, even if the track pitch becomes extremely narrow by employing the SIL technique, it is possible to obtain a high quality reproduced signal which is unaffected by the crosstalk from the adjacent tracks. In addition, the level of the reproduced signal, including a tracking error signal, will not decrease even when the above described measures are taken with respect to the crosstalk.

A further object of the present invention is to provide a magneto-optic recording medium comprising a transparent substrate, and a recording surface, provided on the substrate, and having a land and a groove having approximately the same widths, a phase difference between a bundle of rays transmitted through the land and a bundle of rays transmitted through the groove being described by $\lambda(1/d+(1/2)n)$ or $\lambda((1/2)m-1/d)$, where d denotes an optical depth of the groove, $\lambda$ denotes a wavelength of a bundle of rays irradiated on the recording surface, n is an integer greater than or equal to 0, m is an integer greater than or equal to 1, wherein d is set to satisfy a condition $10 > d > 7$. According to the magneto-optic recording medium of the present invention, it is possible to obtain a high quality reproduced signal in which no crosstalk from an adjacent track is generated, when a signal reproduced from the land and the groove of the recording medium is detected by independent optical systems, even if the signals recorded on both the land and the groove are reproduced. Particularly in a case where the phase compensation is carried out with respect to the reproduced signal from the land and the reproduced signal from the groove using mutually different phase compensation quantities, it is possible to effectively prevent the generation of the crosstalk. As a result, even if the track pitch becomes extremely narrow by employing the SIL technique, it is possible to obtain a high quality reproduced signal which is unaffected by the crosstalk from the adjacent tracks. In addition, the level of the reproduced signal, including a tracking error signal, will not decrease even when the above described measures are taken with respect to the crosstalk.

Other objects and further features of the present invention will be apparent from the following detailed description when read in conjunction with the accompanying drawings.

## BRIEF DESCRIPTION OF THE DRAWINGS

FIG.1 is a cross sectional view for explaining an operating principle of a SIL technique;
FIG.2 is a diagram showing an important part of a first embodiment of an optical information storage unit according to the present invention;
FIG.3 is a diagram showing an embodiment of a reproduced signal processing system including photodetectors;
FIG.4 is a diagram showing an important part of a second embodiment of the optical information storage unit according to the present invention;
FIG.5 is a diagram, on an enlarged scale, showing a cross section along a radial direction of an important part of a magneto-optic disk, together with a convergent lens and a hemispherical lens;
FIG.6 is a diagram showing a phase compensation quantity dependency of a crosstalk level and a carrier level of a magneto-optic signal reproduced from the magneto-optic disk in a case where an optical depth d of a groove is $\lambda/7$;
FIG.7 is a diagram showing a phase compensation quantity dependency of a crosstalk level and a carrier level of a magneto-optic signal reproduced from the magneto-optic disk in a case where the optical depth d of the groove is $\lambda/10$;
FIG.8 is a diagram showing a phase compensation quantity dependency of a crosstalk level and a carrier level of a magneto-optic signal reproduced from the magneto-optic disk in a case where the optical depth d of the groove is $\lambda/8$;
FIG.9 is a diagram showing an important part of a third embodiment of the optical information storage unit according to the present invention; and
FIG. 10 is a diagram showing an important part of a fourth embodiment of the optical information storage unit according to the present invention.

## DESCRIPTION OF THE PREFERRED EMBODIMENTS

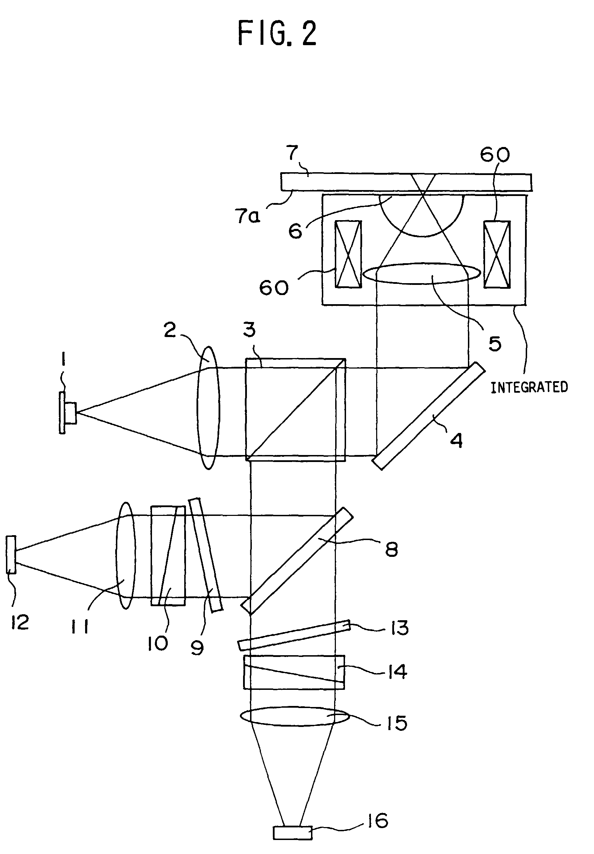

FIG.2 is a diagram showing an important part of a first embodiment of an optical information storage unit according to the present invention. In this embodiment, the present invention is applied to a magneto-optic disk unit which employs the SIL technique and records information on and reproduces information from a substrate surface (recording surface) of a magneto-optic disk formed with a land and a groove. In addition, this first embodiment of the optical information storage unit uses a first embodiment of a magneto-optic recording medium according to the present invention.

In FIG. 2, a bundle of rays emitted from a semiconductor laser 1 is converted into parallel rays by a collimator lens 2 and supplied to a polarization beam splitter 3. Polarization transmitting and reflecting characteristics of the polarization beam splitter 3 are set to satisfy Tp:Rp=80:20 and Ts:Rs=20:80, where Tp denotes a transmittance with respect to a P-polarized light component, Ts denotes the transmittance with respect to a S-polarized light component, Rp denotes a reflectivity with respect to the P-polarized light component, and Rs denotes the reflectivity with respect to the S-polarized light component. The bundle of rays transmitted through the polarization beam splitter 3 is reflected by a mirror 4 and is supplied to a non-aberration lens 5 where the bundle of rays is converted into a convergent spherical wave. Each ray of the bundle of rays converted into the convergent spherical wave is incident perpendicularly to a hemispherical surface of a hemispherical lens 6 and converges at an output surface of the hemispherical lens 6.

The hemispherical lens 6 and the non-aberration lens 5 are integrated as a single unit, and float with a slight gap from a protection layer of the magneto-optic disk 7 formed by an air flow which is generated as the magneto-optic disk 7 rotates. This magneto-optic disk 7 forms the first embodiment of the magneto-optic recording medium. The floating distance of the hemispherical lens 6 from the protection layer of the magneto-optic disk 7 is controlled so that a distance from the hemispherical lens 6 to a recording layer 7a of the magneto-optic disk 7 becomes less than or equal to a wavelength of the bundle of rays. The bundle of rays converged at the output surface of the hemispherical lens 6 is directed towards the magneto-optic disk 7 by an evanescent wave and is irradiated in a near field state on the recording layer 7a of the magneto-optic disk 7. When the bundle of rays is irradiated on the recording surface of the magneto-optic disk 7, magnetic domains are recorded on a track formed on the recording surface or, magnetic domains recorded on the track are reproduced. The bundle of rays irradiated on the recording layer 7a of the magneto-optic disk 7 is reflected by the recording layer 7a and is again supplied to the hemispherical lens 6. Further, the bundle of rays obtained via the hemispherical lens 6 passes through the same path described above and is reflected by the polarization beam splitter 3, thereby increasing the apparent Kerr rotation angle before reaching a semitransparent mirror 8. The bundle of rays reaching the semitransparent mirror 8 is separated into a bundle of rays for reproducing information from the land of the magneto-optic disk 7 and a bundle of rays for reproducing information from the groove of the magneto-optic disk 7. In the following description, it is assumed for the sake of convenience that the bundle of rays reflected by the semitransparent mirror 8 is used for reproducing the information from the land, and the bundle of rays transmitted through the semitransparent mirror 8 is used for reproducing the information from the groove. Of course, when reproducing the information from the land and the groove, a spot of the light beam formed on the recording layer 7a of the magneto-optic disk 7 scans the corresponding tracks on the magneto-optic disk 7.

The bundle of rays reflected by the semi transparent mirror 8 and used for reproducing the information from the land passes through a wave plate 9 which is inclined with respect to a traveling direction of the bundle of rays for making a phase compensation, and reaches a Wollaston prism 10 for making a polarization detection. The Wollaston prism 10 separates the incoming bundle of rays into two bundles of rays having mutually perpendicular planes of polarization, that is, the P-polarized light component and the S-polarized light component described above. The separated P-polarized light component and S-polarized light component are supplied to a photodetector 12 via a convergent lens 11, and corresponding components are detected by a photoelectric conversion made in the photodetector 12. More particularly, signals obtained by the photoelectric conversion made in the photodetector 12 are detected by use of a differential amplifier which will be described later.

The Wollaston prism 10 is made up of parallepiped or cube shaped crystal blocks which are connected to each other at a plane where the optical axes of the two crystals form an angle with respect to an incident surface thereof. Since the Wollaston prism 10 is adjusted to an infinite focal point, the blocks may be fixed by bonding after the adjustment.

On the other hand, the bundle of rays transmitted through the semi transparent mirror 8 and used for reproducing the information from the groove passes through a wave plate 13 which is inclined with respect to a traveling direction of the bundle of rays for making a phase compensation, and reaches a Wollaston prism 14 for making a polarization detection. The Wollaston prism 14 separates the incoming bundle of rays into two bundles of rays having mutually perpendicular planes of polarization, that is, the P-polarized light component and the S-polarized light component described above. The separated P-polarized light component and S-polarized light component are supplied to a photodetector 16 via a convergent lens 15, and corresponding components are detected by a photoelectric conversion made in the photodetector 16. More particularly, signals obtained by the photoelectric conversion made in the photodetector 16 are detected by use of a differential amplifier which will be described later.

Inclination angles of the wave plates 9 and 13 which are provided to make the phase compensations are mutually different, including the positive and negative signs thereof. In addition, angles formed between crystal optical axes of the wave plates 9 and 13 and electrical vectors of incident bundle of rays incident to the wave plates 9 and 13 are also mutually different, including the positive and negative signs thereof. A difference between the phase compensation quantities of the wave plates 9 and 13 is desirably greater than or equal to 60° and less than or equal to 180°.

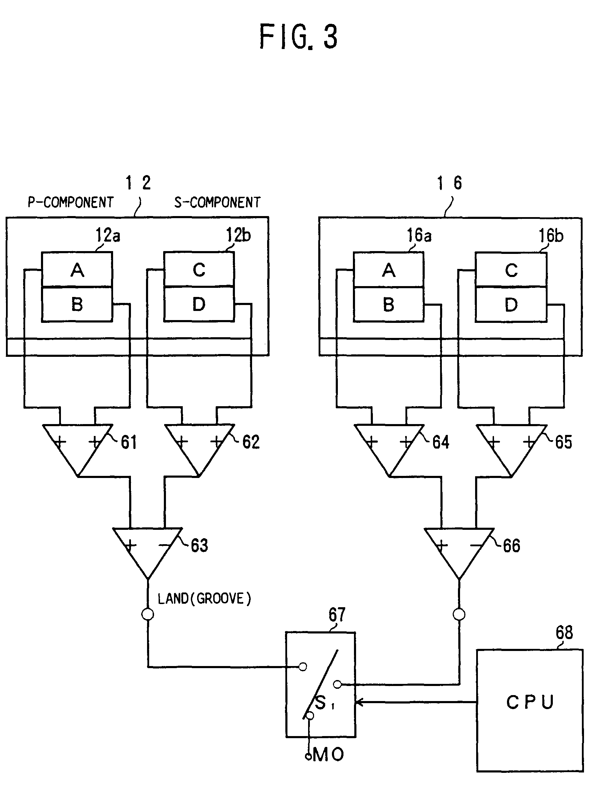

FIG.3 is a diagram showing an embodiment of a reproduced signal processing system including the photodetectors 12 and 16. In FIG. 3, the photodetector 12 is made up of 2-part detectors 12a and 12b. The P-polarized light component is obtained from an operational amplifier 61 which outputs a sum (A+B) of output signals A and B of detector parts A and B of the 2-part detector 12a. On the other hand, the S-polarized light component is obtained from an operational amplifier 62 which outputs a sum (C+D) of output signals C and D of detector parts C and D of the 2-part detector 12b. A differential amplifier 63 subtracts an output (C+D) of the operational amplifier 62 from an output (A+B) of the operational amplifier 61, and supplies to a switch 67 a reproduced signal MO described by ((A+B)-(C+D)) which is reproduced from the land.

On the other hand, the photodetector 16 is made up of 2-part detectors 16a and 16b. The P-polarized light component is obtained from an operational amplifier 64 which outputs a sum (A+B) of output signals A and B of detector parts A and B of the 2-part detector 16a. On the other hand, the S-polarized light component is obtained from an operational amplifier 65 which outputs a sum (C+D) of output signals C and D of detector parts C and D of the 2-part detector 16b. A differential amplifier 66 subtracts an output (C+D) of the operational amplifier 65 from an output (A+B) of the operational amplifier 64, and supplies to a switch 67 a reproduced signal MO described by ((A+B)-(C+D)) which is reproduced from the groove.

A central processing unit (CPU) 68 discriminates whether a track being reproduced is formed in the land or the groove of the magneto-optic disk 7, based on an address on the magneto-optic disk 7, a polarity of a push-pull signal, or the like. Based on this discrimination, the CPU 68 controls the switching of the switch 67 so as to output the reproduced signal MO from the differential amplifier 63 when reproducing the signal from the land and to output the reproduced signal MO from the differential amplifier 66 when reproducing the signal from the groove. As a result, a continuous reproduced signal MO is output from the switch 67.

The reproduced signal processing system shown in FIG.3 may be used in embodiments which will be described later, except that the embodiments which will be described later use photodetectors different from those shown in FIG. 3.

The push-pull signal which is used as a tracking error signal TES can be obtained by a known means by computing (A-B)+(C-D). This tracking error signal TES is supplied to a known means including the voice coil 60 shown in FIG.2, for example, to unitarily drive the non-aberration lens 5 and the hemispherical lens 6, so that a tracking control is carried out to control the spot of the light beam formed on the magneto-optic disk 7 so as to follow and scan an arbitrary track on the magneto-optic disk.

In this embodiment, the signals reproduced from the land and the groove of the magneto-optic disk 7 are detected by independent magneto-optic signal detecting optical systems. Hence, the reproduced signal obtained from the land and the reproduced signal obtained from the groove are subjected to phase compensations having mutually different phase compensation quantities. For this reason, even if the signals are reproduced from both the land and the groove of the magneto-optic disk 7, it is possible to obtain a high-quality reproduced signal in which no crosstalk from an adjacent track is generated. Accordingly, even if the track pitch becomes extremely narrow by employing the SIL technique, it is possible to obtain a high-quality reproduced signal which is unaffected by the crosstalk from the adjacent track. In addition, although the measures described above are taken against the crosstalk, the levels of the reproduced signals, including the tacking error signal, will not decrease.

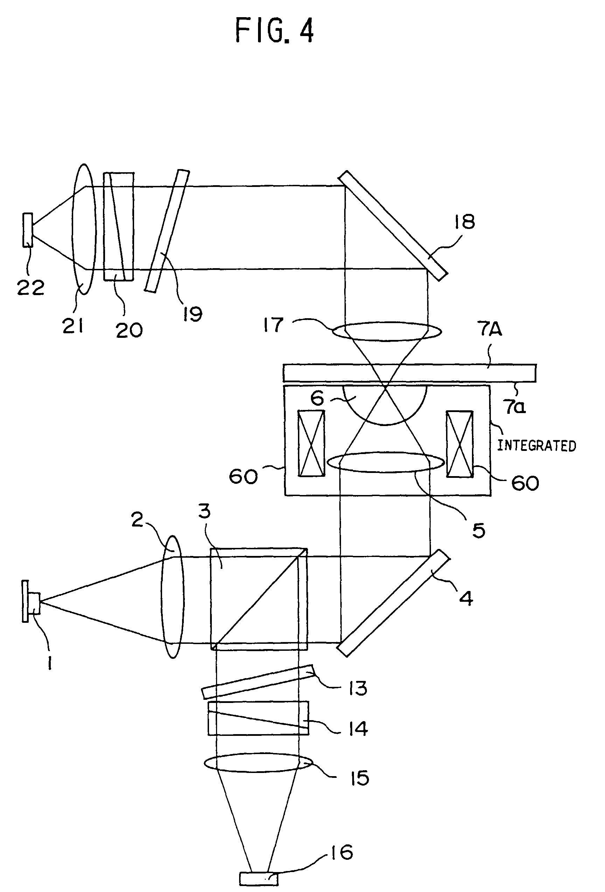

FIG.4 is a diagram showing an important part of a second embodiment of the optical information storage unit according to the present invention. In this embodiment, the present invention is also applied to a magneto-optic disk unit which employs the SIL technique and records information on and reproduces information from a magneto-optic disk formed with a land and a groove. In addition, this second embodiment of the optical information storage unit uses a second embodiment of the magneto-optic recording medium according to the present invention. In FIG. 4, those parts which are the same as those corresponding parts in FIG.2 are designated by the same reference numerals.

In FIG. 4, the bundle of rays emitted from the semiconductor laser 1 is converted into parallel rays by the collimator lens 2 and supplied to the polarization beam splitter 3. The bundle of rays transmitted through the polarization beam splitter 3 is reflected by the mirror 4 and is supplied to the non-aberration lens 5 where the bundle of rays is converted into a convergent spherical wave. Each ray of the bundle of rays converted into the convergent spherical wave is incident perpendicularly to the hemispherical surface of the hemispherical lens 6 and converges at an output surface of the hemispherical lens 6.

The hemispherical lens 6 and the non-aberration lens 5 are integrated as a single unit, and float with a slight gap from a protection layer of the magneto-optic disk 7A formed by an air flow which is generated as the magneto-optic disk 7A rotates. The floating distance of the hemispherical lens 6 from the protection layer of the magneto-optic disk 7A is controlled so that a distance from the hemispherical lens 6 to the recording layer 7a of the magneto-optic disk 7A becomes less than or equal to a wavelength of the bundle of rays. The bundle of rays converged at the output surface of the hemispherical lens 6 is directed towards the magneto-optic disk 7A by an evanescent wave and is irradiated in a near field state on the recording layer 7a of the magneto-optic disk 7A.

The magneto-optic disk 7A forms the second embodiment of the magneto-optic recording medium. The recording layer 7a of this magneto-optic disk 7A is made of a semitransparent layer. Accordingly, a portion of the bundle of rays irradiated on the recording layer 7a of the magneto-optic disk 7A is transmitted through the magneto-optic disk 7A, and a remaining portion of the bundle of rays irradiated on the recording layer 7a is reflected by the recording layer 7a.

The portion of the bundle of rays irradiated on the recording layer 7a of the magneto-optic disk 7A and reflected by the recording layer 7a, that is, the portion of the bundle of rays used to reproduce the signal from the groove, is again supplied to the hemispherical lens 6. Further, this portion of the bundle of rays obtained via the hemispherical lens 6 passes through the same path described above and is reflected by the polarization beam splitter 3, passes through a wave plate 13 which is inclined with respect to a traveling direction of this portion of the bundle of rays for making a phase compensation, and reaches a Wollaston prism 14 for making a polarization detection. The Wollaston prism 14 separates this incoming portion of the bundle of rays into two bundles of rays having mutually perpendicular planes of polarization, that is, the P-polarized light component and the S-polarized light component described above. The separated P-polarized light component and S-polarized light component are supplied to a photodetector 16 via a convergent lens 15, and corresponding components are detected by a photoelectric conversion made in the photodetector 16. More particularly, signals obtained by the photoelectric conversion made in the photodetector 16 are detected by use of a differential amplifier which will be described later.

On the other hand, the portion of the bundle of rays irradiated on the recording layer 7a of the magneto-optic disk 7A and transmitted through the magneto-optic disk 7A, that is, the portion of the bundle of rays used to reproduce the signal from the land, is converted into approximately parallel rays by a condenser lens 17 and reflected by a mirror 18 before reaching a wave plate 19. This wave plate 19 which is inclined with respect to a traveling direction of this portion of the bundle of rays for making a phase compensation, and this portion of the bundle of rays obtained via the wave plate 19 reaches a Wollaston prism 20 for making a polarization detection. The Wollaston prism 20 separates this incoming portion of the bundle of rays into two bundles of rays having mutually perpendicular planes of polarization, that is, the P-polarized light component and the S-polarized light component described above. The separated P-polarized light component and S-polarized light component are supplied to a photodetector 22 via a convergent lens 21, and corresponding components are detected by a photoelectric conversion made in the photodetector 22. More particularly, signals obtained by the photoelectric conversion made in the photodetector 22 are detected by use of a differential amplifier which will be described later. The wave plate 19, the Wollaston prism 20, the convergent lens 21 and the photodetector 22 respectively correspond to and have structures similar to those of the wave plate 9, the Wollaston prism 10, the convergent lens 11 and the photodetector 12 of the first embodiment described above.

Since the land and the groove are provided on the recording layer 7a of the magneto-optic disk 7A, the distance between the condenser lens 17 and the magneto-optic disk 7A constantly changes during the rotation of the magneto-optic disk 7A if the condenser lens 17 is mechanically fixed. However, by setting the NA of the condenser lens 17 to a large value, it is possible to prevent undesirable effects of the change in the distance between the condenser lens 17 and the magneto-optic disk 7A. In addition, it is possible to use an inexpensive plano-convex lens as the condenser lens 17.

Inclination angles of the wave plates 13 and 19 which are provided to make the phase compensations are mutually different, including the positive and negative signs thereof. In addition, angles formed between crystal optical axes of the wave plates 13 and 19 and electrical vectors of incident bundle of rays incident to the wave plates 13 and 19 are also mutually different, including the positive and negative signs thereof. A difference between the phase compensation quantities of the wave plates 13 and 19 is desirably greater than or equal to 60° and less than or equal to 180°.

In this embodiment, the signals reproduced from the land and the groove of the magneto-optic disk 7A are detected by independent magneto-optic signal detecting optical systems which respectively detect the portion of the bundle of rays reflected by the magneto-optic disk 7A and the portion of the bundle of rays transmitted through the magneto-optic disk 7A. Hence, the reproduced signal obtained from the land and the reproduced signal obtained from the groove are subjected to phase compensations having mutually different phase compensation quantities. For this reason, even if the signals are reproduced from both the land and the groove of the magneto-optic disk 7, it is possible to obtain a high-quality reproduced signal in which no crosstalk from an adjacent track is generated. Accordingly, even if the track pitch becomes extremely narrow by employing the SIL technique, it is possible to obtain a high-quality reproduced signal which is unaffected by the crosstalk from the adjacent track. In addition, although the measures described above are taken against the crosstalk, the levels of the reproduced signals, including the tacking error signal, will not decrease.

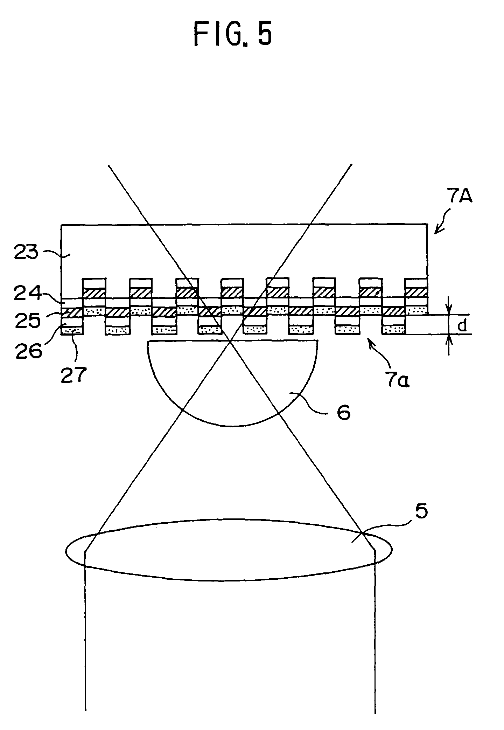

FIG.5 is a diagram, on an enlarged scale, showing a cross section along a radial direction of an important part of the magneto-optic disk 7A, together with the convergent lens 5 and the hemispherical lens 6. As shown in FIG.5, the magneto-optic disk 7A includes a transparent substrate 23, a dielectric layer 24 which forms a protection layer, a TbFeCo magnetic layer 25 which forms a semi transparent recording layer, a dielectric layer 26 which increases the apparent Kerr rotation angle and protects the magnetic layer 25, and an overcoat layer 27 made of a UV resin. The surface of the overcoat layer 27 has a relief structure including lands and grooves formed on the substrate 23. The lands and the grooves may be formed concentrically or, in a spiral manner. In addition, the widths of the lands and the grooves in the radial direction of the magneto-optic disk 7A are approximately the same.

An optical depth d of the groove viewed from the air layer side (lower side in FIG.5) of the magneto-optic disk 7A can be described by $\lambda(1/d)+(1/2)n)$ or $\lambda((1/2)m-1/d)$, where $\lambda$ denotes the wavelength of the bundle of rays, n is an integer greater than or equal to 0 and m denotes an integer greater than or equal to 1, and d is set to satisfy a condition $10 > d > 7$. In other words, the phase error between the bundle of rays transmitted through the land and the bundle of rays transmitted through the groove is set to satisfy the above described condition. A distance from the bottom of the groove (that is, the top surface of the overcoat layer 27 at the groove portion) to the top surface of the land (that is, the top surface of the overcoat layer 27 at the land portion), that is, the physical depth of the groove, is less than or equal to the wavelength of the bundle of rays irradiated on the magneto-optic disk 7A.

For example, in a case where d = 7, $\lambda/7$, $5\lambda/14$, $9\lambda/14$, ... indicate that the positive or negative sign of the phase error between the land and the groove changes alternately as a result. Similarly, in a case where d = 10, $\lambda/10$, $4\lambda/10$, $6\lambda/10$, ... indicate that the positive or negative sign of the phase error between the land and the groove changes alternately as a result. Accordingly, when recording the signal on the land and the groove of the magneto-optic disk 7A, if the optical depth d of the groove is set to satisfy the above described condition, the positive or negative sign of the phase compensation quantity alternately changes as the optical depth d becomes larger.

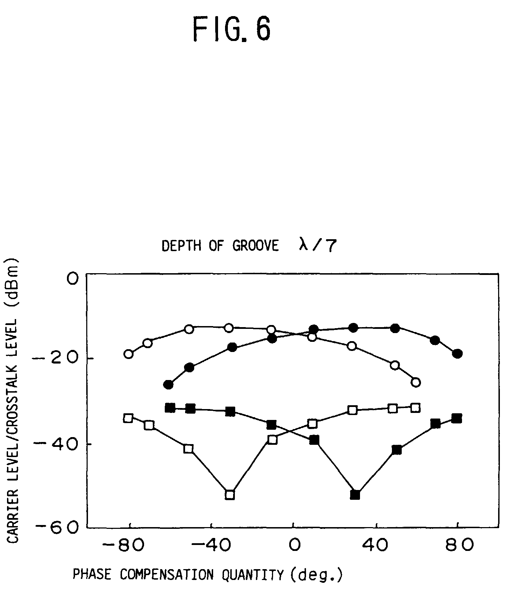

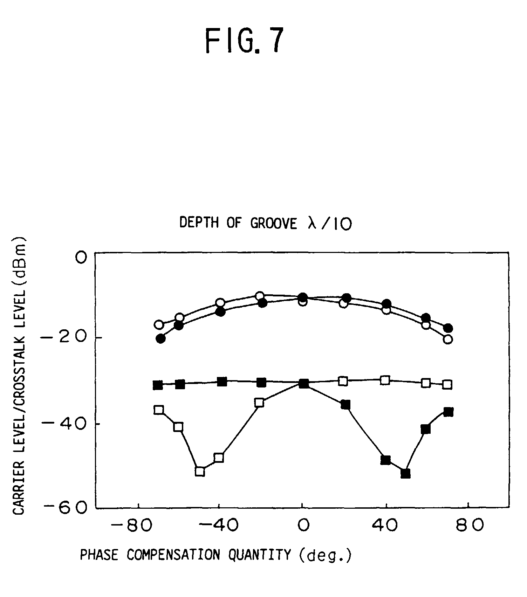

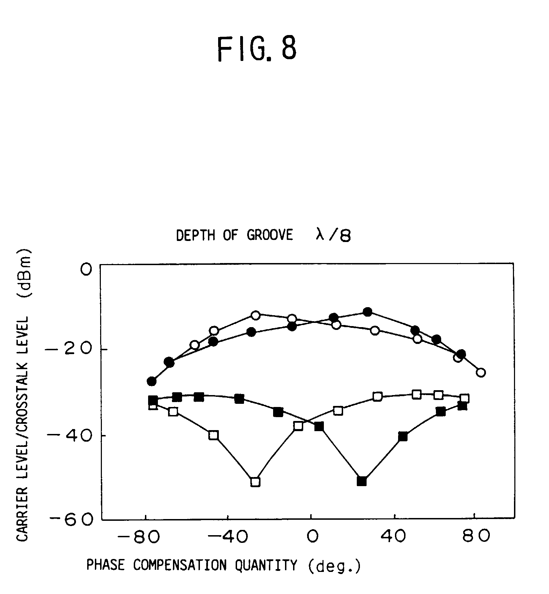

FIG.6 is a diagram showing a phase compensation quantity dependency of a crosstalk level and a carrier level of a magneto-optic signal reproduced from the magneto-optic disk 7A in a case where the optical depth d of the groove is $\lambda/7$. FIG.7 is a diagram showing a phase compensation quantity dependency of a crosstalk level and a carrier level of a magneto-optic signal reproduced from the magneto-optic disk 7A in a case where the optical depth d of the groove is $\lambda/10$. FIG.8 is a diagram showing a phase compensation quantity dependency of a crosstalk level and a carrier level of a magneto-optic signal reproduced from the magneto-optic disk 7A in a case where the optical depth d of the groove is $\lambda/8$. In FIGS.6 through 8, the ordinate indicates the carrier level and the crosstalk level in dBm, and the abscissa indicates the phase compensation quantity in deg (°). In addition, in FIGS.6 through 8, a white circular mark indicates the carrier level reproduced from the groove, a black circular mark indicates the carrier level reproduced from the land, a white square mark indicates the crosstalk level reproduced from an adjacent land, and a black square mark indicates the crosstalk level reproduced from an adjacent groove. Since the signal detection uses the reflected light, the phase error of the reflected light is $\lambda/3.5$ and $\lambda/5$.

In this case, the wavelength of the light beam emitted from the semiconductor laser 1 is 680 nm, the NA of the SIL is 0.85, and the track pitch on the magneto-optic disk 7A is 0.45 $\mu$m.

As shown in FIG. 6, in the case where the optical depth d of the groove is $\lambda/7$, the carrier level shows approximately a maximum value for the phase compensation quantity in a range of -20° to -45° upon signal reproduction from the groove, and the crosstalk which is the value obtained by subtracting the carrier level from the crosstalk level is -30 dB or less. In addition, the carrier level shows approximately a maximum value for the phase compensation quantity in a range of +20° to +45° upon signal reproduction from the land, and the crosstalk is -30 dB or less.

As shown in FIG. 7, in the case where the optical depth d of the groove is $\lambda/10$, the carrier level shows approximately a maximum value for the phase compensation quantity in a range of -30° to -50° upon signal reproduction from the groove, and the crosstalk is -30 dB or less. In addition, the carrier level shows approximately a maximum value for the phase compensation quantity in a range of +30° to +50° upon signal reproduction from the land, and the crosstalk is -30 dB or less.

Therefore, by setting the phase compensation quantity in the range of -30° to -45° upon signal reproduction from the groove and in the range of +30° to +45° upon signal reproduction from the land, it is possible to obtain a high-quality reproduced signal which is virtually free of crosstalk even when the inconsistency of the optical depth d of the groove is taken into consideration.

Particularly in the case where the optical depth d of the groove is $\lambda/8$ as shown in FIG.8, the phase compensation quantity at which the carrier level becomes a maximum and the phase compensation quantity at which the crosstalk becomes a minimum match for the land or the groove.

When the bundle of rays is irradiated from the air layer side of the magneto-optic disk 7A having the construction shown in FIG.5 and the optical depth d of the groove viewed from the air layer side is $\lambda/7$, for example, it means that the physical depth of the groove is 97.14 nm if the refractive index of air is approximately 1 and the wave length λ of the bundle of rays is 680 nm. In this case, if the refractive index of the substrate 23 is 1.58, the phase error between the bundle of rays transmitted through the land of the magneto-optic disk 7A and the bundle of rays transmitted through the groove of the magneto-optic disk 7A is λ/4.43, and is λ/8.83 when converted into the optical depth of the groove for the case where the reflected light is detected. Accordingly, it may be seen that it is possible to reproduce only the signal from the land or the groove by carrying out the phase compensation.

The phase compensation quantity required to reproduce the signal from the land or the groove is dependent on a ratio of the spot size of the light beam irradiated on the magneto-optic disk 7A and the track pitch. The narrower the track pitch, the larger the required phase compensation quantity becomes. If the phase error for the case where the bundle of rays is perpendicularly incident to the wave plate 13 or 19 is denoted by PD and n is an integer greater than or equal to 0, it is possible to realize various phase compensation quantities which are required by use of a wave plate which applies the phase error PD described by $(\lambda/2)n+$approximately$\lambda/4 <$ PD $\leq (\lambda/2)n+$approximately $\lambda/2$ , by setting a phase error $(\lambda/2)(n+1)$ to a reference value 0 by the inclination of the wave plate. This is because the relationships shown in FIGS.6 through 8 have a period of 180°, that is, a period from -90° to +90°. In other words, the condition of the above described period is satisfied if the positive or negative sign of the angle formed between the crystal optical axis of the wave plate and the electrical vector becomes opposite for the two cases where the signals are reproduced from the land and the groove. At the same time, this means that the difference between the phase compensation quantity at the time of reproducing the signal from the land and the phase compensation quantity at the time of reproducing the signal from the groove is 180° at a maximum.

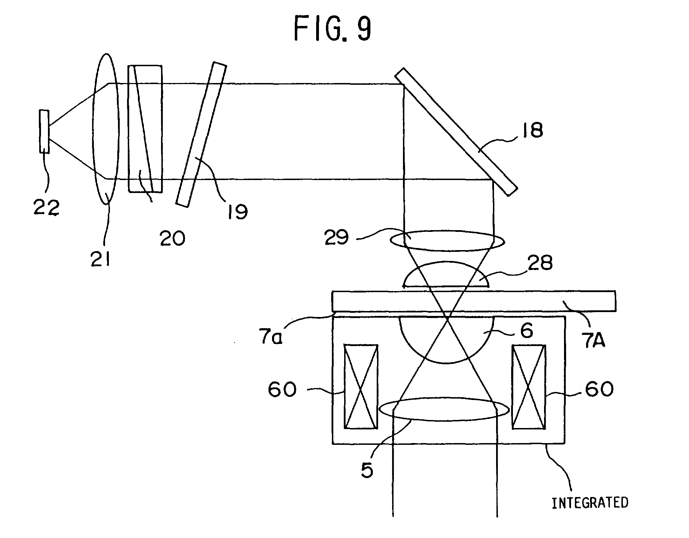

FIG.9 is a diagram showing an important part of a third embodiment of the optical information storage unit according to the present invention. In this embodiment, the present invention is also applied to a magneto-optic disk unit which employs the SIL technique and records information on and reproduces information from a magneto-optic disk formed with a land and a groove. In addition, this third embodiment of the optical information storage unit uses a third embodiment of the magneto-optic recording medium according to the present invention. In FIG. 9, those parts which are the same as those corresponding parts in FIG.4 are designated by the same reference numerals. An optical system which detects the magneto-optic signal from the reflected light from the magneto-optic disk 7A is the same as the corresponding optical system shown in FIG. 4, and a description and illustration thereof will be omitted in FIG. 9.

In FIG. 9, the bundle of rays supplied to the non-aberration lens 5 is converted into the convergent spherical wave. Each ray of the bundle of rays converted into the convergent spherical wave is incident perpendicularly to the hemispherical surface of the hemispherical lens 6 and converges at the output surface of the hemispherical lens 6. The hemispherical lens 6 and the non-aberration lens 5 are integrated as a single unit, and float with a slight gap from the protection layer of the magneto-optic disk 7A formed by the air flow which is generated as the magneto-optic disk 7A rotates. The floating distance of the hemispherical lens 6 from the protection layer of the magneto-optic disk 7A is controlled so that the distance from the hemispherical lens 6 to the recording layer 7a of the magneto-optic disk 7A becomes less than or equal to the wavelength of the bundle of rays. The bundle of rays converged at the output surface of the hemispherical lens 6 is directed towards the magneto-optic disk 7A by the evanescent wave and is irradiated in the near field state on the recording layer 7a of the magneto-optic disk 7A.

The bundle of rays transmitted through the magneto-optic disk 7A via the hemispherical lens 6 is supplied to a plano-convex lens 28 which forms a hemispherical lens including the thickness of the substrate 23, and is output perpendicularly from a spherical surface of the plano-convex lens 28. The bundle of rays output from the spherical surface of the plano-convex lens 28 is converted into approximately parallel rays by a condenser lens 29. The condenser lens 29 may be made of a general plano-convex lens instead of a non-aberration lens.

The approximately parallel rays from the condenser lens 29 are reflected by the mirror 18 and supplied to the wave plate 19 which is inclined with respect to the traveling direction of the bundle of rays for making the phase compensation, and this bundle of rays obtained via the wave plate 19 reaches the Wollaston prism 20 for making the polarization detection. The Wollaston prism 20 separates this incoming bundle of rays into two bundles of rays having mutually perpendicular planes of polarization, that is, the P-polarized light component and the S-polarized light component described above. The separated P-polarized light component and S-polarized light component are supplied to the photodetector 22 via the convergent lens 21, and the corresponding components are detected by a photoelectric conversion made in the photodetector 22. More particularly, signals obtained by the photoelectric conversion made in the photodetector 22 are detected by use of a differential amplifier similar to that described above. The wave plate 19, the Wollaston prism 20, the convergent lens 21 and the photodetector 22 respectively correspond to and have structures similar to those of the wave plate 9, the Wollaston prism 10, the convergent lens 11 and the photodetector 12 of the first embodiment described above.

In this embodiment, the plano-convex lens 28 and the condenser lens 29 are integrally provided as a single unit, and the plano-convex lens 28 and the condenser lens 29 float with a slight gap from the magneto-optic disk 7A, by a principle similar to that described above for the non-aberration lens 5 and the hemispherical lens 6. In addition, the distances of the plano-convex lens 28 and the condenser lens 29 from the substrate 23 of the magneto-optic disk 7A are always maintained constant. Accordingly, there is virtually no change in the light quantity of the bundle of rays incident to the condenser lens 29, and it is always possible to detect a stable magneto-optic signal. Furthermore, this embodiment can also obtain effects similar to those obtainable in the second embodiment described above.

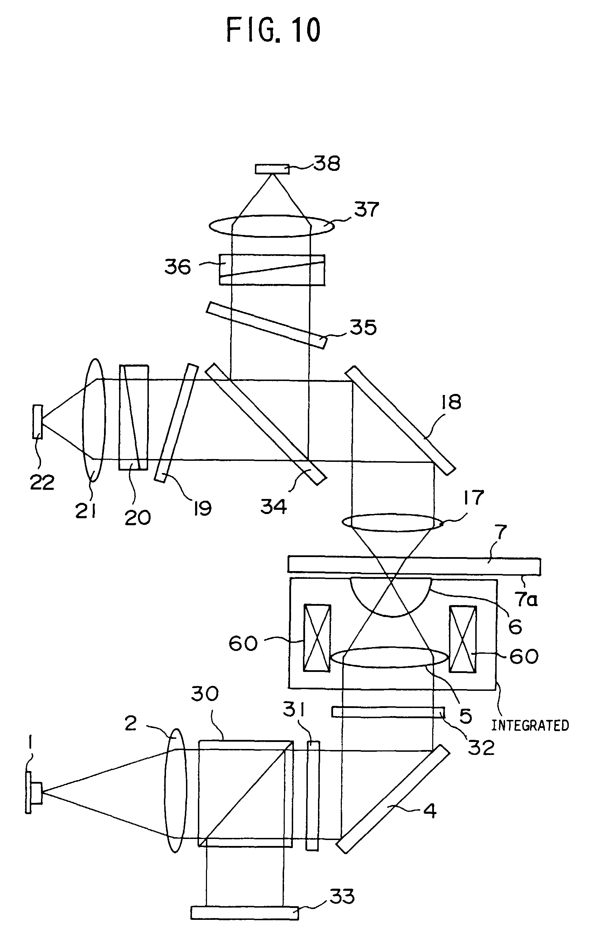

FIG. 10 is a diagram showing an important part of a fourth embodiment of the optical information storage unit according to the present invention. In this embodiment, the present invention is also applied to a magneto-optic disk unit which employs the SIL technique and records information on and reproduces information from a magneto-optic disk formed with a land and a groove. In addition, this fourth embodiment of the optical information storage unit uses a fourth embodiment of the magneto-optic recording medium according to the present invention. In FIG. 10, those parts which are the same as those corresponding parts in FIG.4 are designated by the same reference numerals, and a description thereof will be omitted.

In FIG. 10, the bundle of rays emitted from the semiconductor laser 1 is converted into the parallel rays by the collimator lens 2 and supplied to a polarization beam splitter 30. Polarization transmitting and reflecting characteristics of the polarization beam splitter 30 are set to satisfy Tp:Rp=100:0 and Ts:Rs=0:100, where Tp denotes a transmittance with respect to a P-polarized light component, Ts denotes the transmittance with respect to a S-polarized light component, Rp denotes a reflectivity with respect to the P-polarized light component, and Rs denotes the reflectivity with respect to the S-polarized light component. Since the electrical vector of the incident light to the polarization beam splitter 30 is the P-polarized light, approximately all of the incident light is transmitted through the polarization beam splitter 30.

The bundle of rays transmitted through the polarization beam splitter 30 is supplied to a first 1/4 wave plate 31 which has a crystal optical axis inclined by 45° with respect to the plane of polarization and converted into a circularly polarized light. The bundle of rays converted into the right circularly polarized light (or left circularly polarized light) is reflected by the mirror 4 and supplied to a second 1/4 wave plate 32. A crystal optical axis of the second 1/4 wave plate 32 is set perpendicularly to the crystal optical axis of the first 1/4 wave plate 31. Accordingly, the bundle of rays passed through the second 1/4 wave plate 32 is again a P-polarized light when viewed from the polarization beam splitter 30. The bundle of rays passed through the second 1/4 wave plate 32 is converted into a convergent spherical wave by the non-aberration lens 5 and supplied to the hemispherical lens 6. The bundle of rays output from the hemispherical lens 6 is irradiated on the magneto-optic disk 7A, and is separated into a reflected light component and a transmitted light component from the magneto-optic disk 7A.

The reflected bundle of rays from the magneto-optic disk 7A again passes through the hemispherical lens 6 and the non-aberration lens 5, and is supplied to the second 1/4 wave plate 32 where the bundle of rays is converted into a left circularly polarized light (or right circularly polarized light). The left circularly polarized light (or right circularly polarized light) is reflected by the mirror 4 and is supplied to the first 1/4 wave plate 31. Since the bundle of rays incident to the first 1/4 wave plate 31 is a left circularly polarized light (or right circularly polarized light), the bundle of rays passed through the first 1/4 wave plate 31 is a S-polarized light when viewed from the polarization beam splitter 30. But in this case, the bundle of rays passed through the first 1/4 wave plate 31 is affected by the Kerr effect of the magneto-optic disk 7A, and is not a perfect S-polarized light but is a slightly elliptically polarized light. Accordingly, out of the bundle of rays passed through the first 1/4 wave plate 31, there is a component which actually is transmitted through the polarization beam splitter 30. However, a large portion of the bundle of rays passed through the first 1/4 wave plate 31 is reflected by the polarization beam splitter 30 and detected by a 2-part photodetector 33, and it is possible to obtain a push-pull signal which is used as the tracking error signal TES from the 2-part photodetector 33.

In other words, this embodiment uses the reflected light from the magneto-optic disk 7A only for generating the tracking error signal TES. As a result, it is possible to improve the utilization efficiency of the laser power of the light irradiated on the magneto-optic disk 7A.

On the other hand, the bundle of rays transmitted through the magneto-optic disk 7A is converted into parallel rays by the condenser lens 17 and separated into two bundles of rays by a semitransparent mirror 34. The light component transmitted through the semitransparent mirror 34 is used to reproduce the signal from the land, and is supplied to the wave plate 19 which is inclined with respect to the traveling direction of the light component for making the phase compensation. The bundle of rays passed through the wave plate 19 is supplied to the Wollaston prism 20 for making a polarization detection. The Wollaston prism 20 separates this bundle of rays into two bundles of rays having mutually perpendicular planes of polarization, that is, the P-polarized light component and the S-polarized light component described above. The separated P-polarized light component and S-polarized light component are supplied to the photodetector 22 via the convergent lens 21, and corresponding components are detected by the photoelectric conversion made in the photodetector 22. More particularly, signals obtained by the photoelectric conversion made in the photodetector 22 are detected by use of a differential amplifier, similarly as described above.

On the other hand, the light component reflected by the semitransparent mirror 34 is used to reproduce the signal from the groove, and is supplied to a wave plate 35 which is inclined with respect to the traveling direction of the light component for making the phase compensation. The bundle of rays passed through the wave plate 35 is supplied to a Wollaston prism 36 for making a polarization detection. The Wollaston prism 36 separates this bundle of rays into two bundles of rays having mutually perpendicular planes of polarization, that is, the P-polarized light component and the S-polarized light component described above. The separated P-polarized light component and S-polarized light component are supplied to a photodetector 38 via a convergent lens 37, and corresponding components are detected by the photoelectric conversion made in the photodetector 38. More particularly, signals obtained by the photoelectric conversion made in the photodetector 38 are detected by use of a differential amplifier, similarly as described above. The wave plate 35, the Wollaston prism 36, the convergent lens 37 and the photodetector 38 respectively correspond to and have structures similar to those of the wave plate 19, the Wollaston prism 20, the convergent lens 21 and the photodetector 22 of the second embodiment described above.

In this embodiment, it is also possible to obtain effects similar to those obtainable in the second embodiment described above.

In the second and third embodiments described above, the reproduced signal from the land is detected based on the light transmitted through the magneto-optic disk 7A, and the reproduced signal from the groove is detected based on the light reflected by the magneto-optic disk 7A. However, it is of course possible to detect the reproduced signal from the groove based on the light transmitted through the magneto-optic disk 7A and to detect the reproduced signal from the land based on the light reflected by the magneto-optic disk 7A.

In each of the embodiments described above, a magneto-optic disk is used as the magneto-optic recording medium. However, the present invention is not limited to the magneto-optic disk, and the present invention is similarly applicable to any type of magneto-optic recording medium having a structure such that the information is recorded on the land and the groove of the magneto-optic recording medium.

In addition, although the SIL technique is employed in the embodiments described above, the present invention is similarly applicable to optical information storage units which are designed to irradiate light on a magneto-optic recording medium using a near field.

Therefore, according to the present invention, it is possible to reduce the crosstalk from the adjacent tracks on the recording medium, and to satisfactorily reproduce information from the recording medium regardless of a change in the polarization state, thereby making it possible to realize a compact and high-performance optical information storage unit.

Further, the present invention is not limited to these embodiments, but various variations and modifications may be made without departing from the scope of the present invention.

## Claims

1. An optical information storage unit for irradiating a light on a recording medium having a recording surface with a land and a groove by use of a near field and for detecting a reproduced signal from a reflected light which is reflected by the recording medium, characterized by: a first optical system (9-12) detecting a signal reproduced from the land based on the reflected light; and a second optical system (13-16), independent of said first optical system, detecting a signal reproduced from the groove based on the reflected light.

2. The optical information storage unit as claimed in claim 1, characterized in that said first optical system (9-12) comprises first phase compensation means (9, 10), said second optical system (13-16) comprises second phase compensation means (13, 14), and a difference between a phase compensation quantity of said first phase compensation means and a phase compensation quantity of said second phase compensation means is greater than or equal to 60° and less than or equal to 180°.

3. The optical information storage unit as claimed in claim 1 or 2, further characterized by: a switch (67) alternately outputting a reproduced signal output from said first optical system (9-12) and a reproduced signal output from said second optical system (13-16).

4. An optical information storage unit for irradiating a light on a recording medium having a recording surface with a land and a groove by use of a near field and for detecting a reproduced signal from a transmitted light which is transmitted through the recording medium and a reflected light which is reflected by the recording medium, characterized by: a first optical system (17-22, 28, 29) detecting a signal reproduced from one of the land and the groove based on the transmitted light; and a second optical system (13-16), independent of said first optical system, detecting a signal reproduced from the other of the land and the groove based on the reflected light.

5. The optical information storage unit as claimed in claim 4, characterized in that said first optical system (17-22, 28, 29) comprises first phase compensation means (19, 20), said second optical system (13-16) comprises second phase compensation means (13, 14), and a difference between a phase compensation quantity of said first phase compensation means and a phase compensation quantity of said second phase compensation means is greater than or equal to 60° and less than or equal to 180°.

6. The optical information storage unit as claimed in claim 4 or 5, characterized in that at least one of said first and second phase compensation means (19, 20; 13, 14) comprises a wave plate (19, 13) arranged obliquely to an optical axis.

7. The optical information storage unit as claimed in claim 6, characterized in that said wave plate (19, 13) applies to a light incident thereto a phase error PD satisfying $(\lambda/2)n+\text{approximately}\lambda/4 < PD \leq (\lambda/2)n+\text{approximately}\lambda/2$, where A denotes a wavelength of the light and n is an integer greater than or equal to 0.

8. The optical information storage unit as claimed in any of claims 4 to 7, characterized in that said first optical system (17-22, 28, 29) comprises a plano-convex lens (28) having a convex surface outputting the transmitted light in a vertical direction thereto, and a condenser lens (29) converting a light from said plano-convex lens into an approximately parallel bundle of rays.

9. The optical information storage unit as claimed in any of claims 4 to 8, further characterized by: a switch (67) alternately outputting a reproduced signal output from said first optical system (17-22, 28, 29) and a reproduced signal output from said second optical system (13-16).

10. An optical information storage unit for irradiating a light on a recording medium having a recording surface with a land and a groove by use of a near field and for detecting a reproduced signal from a transmitted light which is transmitted through the recording medium, characterized by: a first optical system (19-22) detecting a signal reproduced from the land based on the transmitted light; and a second optical system (35-38), independent of said first optical system, detecting a signal reproduced from the groove based on the transmitted light.

11. The optical information storage unit as claimed in claim 10, characterized in that said first optical system (19-22) comprises first phase compensation means (19, 20), said second optical system (35-38) comprises second phase compensation means (35, 36), and a difference between a phase compensation quantity of said first phase compensation means and a phase compensation quantity of said second phase compensation means is greater than or equal to 60° and less than or equal to 180°.

12. The optical information storage unit as claimed in claim 10 or 11, characterized in that at least one of said first and second phase compensation means (19, 20; 35, 36) comprises a wave plate (19, 35) arranged obliquely to an optical axis.

13. The optical information storage unit as claimed in claim 12, characterized in that said wave plate (19, 35) applies to a light incident thereto a phase error PD satisfying $(\lambda/2)n+\text{approximately}\lambda/4 < PD \leq (\lambda/2)n+\text{approximately}\lambda/2$, where $\lambda$ denotes a wavelength of the light and n is an integer greater than or equal to 0.

14. The optical information storage unit as claimed in any of claims 10 to 13, further characterized by: a third optical system (4, 31-33) generating a tracking error signal from a reflected light which is reflected by the recording medium.

15. The optical information storage unit as claimed in any of claims 10 to 14, characterized in that said third optical system (4, 31-33) comprises a polarization beam splitter (30) through which the light passes when the light is irradiated on the recording medium, a first 1/4 wave plate (31) having a crystal optical axis inclined by 45° with respect to a plane of polarization, and a second 1/4 wave plate (32) having a crystal optical axis which is perpendicular to the crystal optical axis of said first 1/4 wave plate.

16. The optical information storage unit as claimed in any of claims 10 to 15, further characterized by: a switch (67) alternately outputting a reproduced signal output from said first optical system (19-22) and a reproduced signal output from said second optical system (35-38).

17. The optical information storage unit as claimed in any of claims 1 to 16, further characterized by: a solid immersion lens (SIL) (6) irradiating the light on the recording surface of the recording medium using the near field.

18. A magneto-optic recording medium comprising a transparent substrate (23); and a recording surface, provided on said substrate, and having a land and a groove having approximately the same widths, characterized in that: said groove having an optical depth d described by $\lambda(1/d+(1/2)n)$ or $\lambda((1/2)m-1/d)$, where $\lambda$ denotes a wavelength of a bundle of rays irradiated on the recording surface, n is an integer greater than or equal to 0, m is an integer greater than or equal to 1, and wherein d is set to satisfy a condition $10 > d > 7$.

19. A magneto-optic recording medium comprising a transparent substrate (23); and a recording surface, provided on said substrate, and having a land and a groove having approximately the same widths, characterized in that a phase difference between a bundle of rays transmitted through the land and a bundle of rays transmitted through the groove being described by $\lambda(1/d+(1/2)n)$ or $\lambda((1/2)m-1/d)$, where d denotes an optical depth of the groove, $\lambda$ denotes a wavelength of a bundle of rays irradiated on the recording surface, n is an integer greater than or equal to 0, m is an integer greater than or equal to 1, and wherein d is set to satisfy a condition $10 > d > 7$.

20. The magneto-optic recording medium as claimed in claim 18 or 19, characterized in that a physical depth of the groove is less than or equal to a wavelength of the bundle of rays irradiated on the recording medium.

# FIG. 1

EVANESCENT WAVE

107a

107

107b

107c

INTEGRATED

106

105

# FIG. 2

INTEGRATED

# FIG. 3

# FIG. 4

# FIG. 5

# FIG. 6

DEPTH OF GROOVE $\lambda / 7$

# FIG. 7

DEPTH OF GROOVE λ / 10

CARRIER LEVEL/CROSSTALK LEVEL (dBm)

PHASE COMPENSATION QUANTITY (deg.)

# FIG. 8

DEPTH OF GROOVE  λ/8

Y-axis: CARRIER LEVEL/CROSSTALK LEVEL  (dBm)

X-axis: PHASE COMPENSATION QUANTITY (deg.)

# FIG. 9

EP 0 908 874 A1

# FIG. 10

EP 0 908 874 A1

# DOCUMENTS CONSIDERED TO BE RELEVANT

**European Patent Office**

## EUROPEAN SEARCH REPORT

**Application Number**

EP 98 10 4381

| Category | Citation of document with indication, where appropriate, of relevant passages | Relevant to claim | CLASSIFICATION OF THE APPLICATION (Int.Cl.6) |
|---|---|---|---|
| A | EP 0 594 193 A (MATSUSHITA ELECTRIC IND CO LTD) 27 April 1994 * claim 1; figure 1 * | 1,4,10 | G11B7/12 G11B7/135 G11B7/00 G11B11/10 |
| A | EP 0 726 565 A (LG ELECTRONICS INC) 14 August 1996 * claim 1; figure 2 * | 1,4,10 | |
| A | EP 0 503 236 A (IBM) 16 September 1992 * claims 1-5; figure 1A * | 1,4,10 | |
| P,X | WO 98 09278 A (DIGITAL PAPYRUS TECHNOLOGIES) 5 March 1998 * claim 75; figures 2,3 * | 1,4,10 | |
| P,A | EP 0 814 468 A (HITACHI LTD) 29 December 1997 * claims 1,7; figures 1,6 * | 1,4,10 | |
| X | PATENT ABSTRACTS OF JAPAN vol. 096, no. 012, 26 December 1996 & JP 08 221820 A (HITACHI LTD), 30 August 1996 * abstract * | 18-20 | TECHNICAL FIELDS SEARCHED (Int.Cl.6) G11B |
| A | PATENT ABSTRACTS OF JAPAN vol. 097, no. 007, 31 July 1997 & JP 09 069244 A (SONY CORP), 11 March 1997 * abstract * | 18-20 | |
| A | US 5 414 652 A (MIEDA MICHINOBU ET AL) 9 May 1995 * claim 1; figures 1,2 * | 18-20 | |
| A | US 5 636 201 A (OOKI HIROSHI) 3 June 1997 * claim 1; figure 4 * | 18-20 | |
| | -/-- | | |

The present search report has been drawn up for all claims

| Place of search | Date of completion of the search | Examiner |
|---|---|---|
| BERLIN | 1 February 1999 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

**European Patent Office**

**EUROPEAN SEARCH REPORT**

Application Number

EP 98 10 4381

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 602 824 A (OOKI HIROHSI ET AL) 11 February 1997 * claim 1; figure 8C * | 18-20 | |

TECHNICAL FIELDS SEARCHED (Int.Cl.6)

The present search report has been drawn up for all claims

| Place of search | Date of completion of the search | Examiner |
|---|---|---|
| BERLIN | 1 February 1999 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent

Office

**Application Number**

EP 98 10 4381

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| European Patent Office | LACK OF UNITY OF INVENTION SHEET B | Application Number EP 98 10 4381 |
|---|---|---|

The Search Division considers that the present European patent application does not comply with the requirements of unity of invention and relates to several inventions or groups of inventions, namely:

1. Claims: 1-17

   Near-field optical information storage unit.

2. Claims: 18-20

   Magnetooptical recording medium

**ANNEX TO THE EUROPEAN SEARCH REPORT
ON EUROPEAN PATENT APPLICATION NO.**     EP 98 10 4381

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-1999

| Patent document cited in search report | | Publication date | Patent family member(s) | | Publication date |
|---|---|---|---|---|---|
| EP 0594193 | A | 27-04-1994 | JP | 6139647 A | 20-05-1994 |
| | | | DE | 69322590 D | 28-01-1999 |
| | | | US | 5463609 A | 31-10-1995 |
| | | | US | 5577016 A | 19-11-1996 |
| | | | US | 5602819 A | 11-02-1997 |
| EP 0726565 | A | 14-08-1996 | CN | 1136694 A | 27-11-1996 |
| | | | JP | 2672805 B | 05-11-1997 |
| | | | JP | 8255369 A | 01-10-1996 |
| | | | US | 5757757 A | 26-05-1998 |
| EP 0503236 | A | 16-09-1992 | US | 5208648 A | 04-05-1993 |
| | | | JP | 1987116 C | 08-11-1995 |
| | | | JP | 5157701 A | 25-06-1993 |
| | | | JP | 7018806 B | 06-03-1995 |
| | | | US | 5220403 A | 15-06-1993 |
| WO 9809278 | A | 05-03-1998 | NONE | | |
| EP 0814468 | A | 29-12-1997 | WO | 9627880 A | 12-09-1996 |
| US 5414652 | A | 09-05-1995 | JP | 7065423 A | 10-03-1995 |
| | | | JP | 8055375 A | 27-02-1996 |
| | | | DE | 4430222 A | 02-03-1995 |
| US 5636201 | A | 03-06-1997 | JP | 8147761 A | 07-06-1996 |
| US 5602824 | A | 11-02-1997 | JP | 8055366 A | 27-02-1996 |
| | | | JP | 8077607 A | 22-03-1996 |
| | | | JP | 8077608 A | 22-03-1996 |
| | | | EP | 0696795 A | 14-02-1996 |

EPO FORM P0459

For more details about this annex : see Official Journal of the European Patent Office, No. 12/82